# EUROPÄISCHE PATENTSCHRIFT

(11) **EP 2 140 951 B1**
(45) Veröffentlichungstag und Bekanntmachung des Hinweises auf die Patenterteilung: **23.05.2012**
(21) Anmeldenummer: 09004450.4
(22) Anmeldetag: 27.03.2009
(51) Int. Cl.: B21B 38/02, B21B 38/06, G01B 7/34, G01L 5/04

(54) **Planheitsmessrolle und Verfahren zur Ermittlung von Planheitsfehlern eines Bandes**
Evenness measuring roller and method for calculating evenness errors of a belt
Rouleau de mesure de la planéité et procédé de détermination d'erreurs de planéité d'une bande

(30) Priorität: 30.06.2008 DE 102008030282
(43) Veröffentlichungstag der Anmeldung: 06.01.2010
(73) Patentinhaber: BWG BERGWERK- UND WALZWERK-MASCHINENBAU GMBH, D-47051 Duisburg (DE)
(72) Erfinder: Noé, Andreas, Dipl.-Ing., 47647 Kerken (DE)
(74) Vertreter: von dem Borne, Andreas

(56) Entgegenhaltungen:
- EP-A1- 1 557 638
- DE-A1- 10 329 430
- DE-A1-102004 008 303
- US-A- 4 428 244

## Beschreibung

Die Erfindung betrifft eine Messrolle zur Ermittlung von Planheitsfehlern eines Bandes und/oder zur Ermittlung des Bandzuges eines Bandes, insbesondere eines Metallbandes mit zumindest einem in den Rollenmantel bzw. in die Rollenoberfläche integrierten Messbalken, welcher auf Sensoren, z. B. auf Kraftmesselementen, vorzugsweise Piezoelementen, abgestützt ist. Insbesondere betrifft die Erfindung eine Planheitsmessrolle zur Ermittlung von Planheitsfehlern in einem Band bzw. zur Ermittlung der Planheit eines Bandes, insbesondere eines Metallbandes, mit zumindest einem in den Rollenmantel bzw. die Rollenoberfläche integrierten Planheitsmessbalken, welcher auf einen oder mehreren, vorzugsweise zwei Sensoren abgestützt ist und schräg zur Rollenachse verläuft, sodass er sich über einerseits einen vorgegebenen Breitenbereich und andererseits einen vorgegebenen Umfangsbereich bzw. Drehwinkelbereich der Rolle erstreckt. - Bei einer solchen Planheitsmessrolle können mehrere über die Bandbreite verteilte Planheitsmessbalken vorgesehen sein, welche jeweils einen bestimmten Breitenbereich der Messrolle bzw. des Metallbandes abdecken und sich gegebenenfalls jeweils über einen identischen Umfangsbereich bzw. Drehwinkelbereich erstrecken. Dabei ist vorzugsweise jeder Planheitsmessbalken auf mehreren Sensoren, z. B. zwei Sensoren abgestützt, welche z. B. in den Balkenendbereichen angeordnet sind. Die Sensoren sind vorzugsweise als Kraftmessgeber, z. B. Piezo-Kraftmessgeber ausgebildet. Die Erfindung umfasst jedoch auch Ausführungsformen mit anderen Sensoren.

Mit einer derartigen Planheitsmessrolle werden Planheitsfehler in Bändern, insbesondere Metallbändern, im Wege einer Messung der Bandzugspannungsverteilung über die Bandbreite ermittelt, wobei das über die gesamte Bandbreite unter einem Bandzug stehende Band die Planheitsmessrolle mit einem vorgegebenen Umschlingungswinkel umschlingt und dadurch örtliche Anpresskräfte entsprechend der örtlichen Längszugspannungsverteilung in Bandbreitenrichtung auf die Planheitsmessrolle ausübt, aus denen sich die Bandzugspannungsverteilung erfassen lässt. Aus der Bandzugspannungsverteilung über die Bandbreite lassen sich dann unmittelbar Bandfehler und insbesondere Welligkeiten bzw. Bandsäbel ermitteln, da Längenabweichungen einzelner Bandstreifen durch Zugspannungsunterschiede repräsentiert werden.

Eine Planheitsmessrolle der eingangs beschriebenen Art ist beispielsweise aus der DE 10 2004 008 303 A1 bekannt. Bei dieser Planheitsmessrolle sind jeweils zwei Messbalken diametral gegenüberliegend in den Rollenmantel integriert und über eine Zugstange miteinander verspannt. Jeder der Messbalken ist auf Kraftmessgebem abgestützt. Durch eine solche Anordnung kann insbesondere mit Piezo-Quarzen mit Vorspannung als Sensoren gearbeitet werden, ohne dass ein Kraftnebenschluss in Kauf genommen werden muss, da Vorspannung, Fliehkräfte und Gewichtskräfte der Messbalken durch die diametral gegenüberliegende Anordnung kompensiert werden können.

Die bekannten Planheitsmessrollen haben sich grundsätzlich bewährt, sie sind jedoch weiterentwicklungsfähig. So besteht grundsätzlich das Problem, dass mit Hilfe der Messbalken die Zugspannung an einer bestimmten Bandbreitenkoordinate gemessen wird, welche sich aus einer Überlagerung der Bandeigenspannung einerseits und dem Bandzug ergibt. Denn die Bänder werden stets unter einem vorgegebenen Bandzug über die Planheitsmessrolle geführt werden. Zeitliche Schwankungen des Bandzuges können dann zu einer Verfälschung der Messergebnisse führen. Es wäre zwar grundsätzlich möglich, den Bandzug mit einer separaten Vorrichtung in Abhängigkeit von der Zeit aufzuzeichnen, um auf diese Weise eine Korrekturfunktion zu generieren. Dies ist jedoch mit einem hohen Aufwand verbunden. Sofern eine Messung des Bandzuges beispielsweise mit herkömmlichen "load-cells" im Bereich der Rollenlager gemessen wird, kann die Dynamik häufig nicht ausreichen. Hier setzt die Erfindung ein.

Im Übrigen kennt man eine Walze mit zwei streifenförmigen Drucksensoren an der Außenfläche der Walze, wobei die Drucksensoren in einem mittleren Bereich der Walze angeordnet sind und sich im Wesentlichen entlang der Umfangsrichtung der Walze erstrecken. Die Drucksensoren weisen ein anorganisches Material mit piezoelektrischen Eigenschaften auf. Eine derartige Walze ist Bestandteil einer Druckmaschine, bei welcher zwei Walzen einen Druckspalt begrenzen (vgl. DE 103 29 430 A1). Auf die Entwicklung von Messrollen zur Ermittlung des Bandzuges und insbesondere Messrollen zur Ermittlung von Planheitsfehlern eines Bandes, insbesondere Metallbandes, hatten derartige Entwicklungen keinen Einfluss.

Der Erfindung liegt die Aufgabe zugrunde, eine Messrolle zu schaffen, mit welcher sich der zeitliche Verlauf des Bandzuges auf einfache und genaue Weise messen lässt. Insbesondere soll eine Planheitsmessrolle zur Ermittlung von Planheitsfehlem bzw. zur Ermittlung der Bandplanheit in einem Band, insbesondere Metallband, geschaffen werden, welche sich durch eine hohe Messgenauigkeit auszeichnet. Dabei sollen zeitliche Schwankungen des Bandzuges das Planheitsmessergebnis nicht negativ beeinflussen.

Zur Lösung dieser Aufgabe lehrt die Erfindung bei einer gattungsgemäßen Messrolle, dass der Messbalken sich als Bandzugmessbalken zur Ermittlung des zeitlichen Verlaufes des Bandzuges im Wesentlichen entlang der Umfangsrichtung über einen vorgegebenen Umfangsbereich erstreckt. Besonderes bevorzugt lehrt die Erfindung bei einer gattungsgemäßen Planheitsmessrolle der eingangs beschriebenen Art, dass dem Planheitsmessbalken zumindest ein Bandzugmessbalken als Referenzmessbalken zugeordnet ist, welcher ebenfalls auf einem oder mehreren Sensoren abgestützt ist und sich zur Ermittlung des zeitlichen Verlaufes des Bandzuges im Wesentlichen bzw. ausschließlich in Umfangsrichtung über einen vorgegebenen Umfangsbereich erstreckt. - Die Erfindung geht dabei von der Erkenntnis aus, dass sich zeitliche Schwankungen des Bandzuges, welche den Messsignalen des Planheitsmessbalkens überlagert sind, auf einfache und besonders exakte Weise eliminieren bzw. kompensieren lassen, wenn die Planheitsmessrolle nicht nur mit einem oder mehreren schräg zur Rollenachse angeordneten Planheitsmessbalken ausgerüstet ist, sondern darüber hinaus noch zumindest einen sich ausschließlich in Umfangsrichtung erstreckenden und folglich nicht schräg zur Rollenachse, sondern im Wesentlichen senkrecht zur Rollenachse bzw. entlang der Bandlaufrichtung angeordneten Referenzmessbalken aufweist. Da dieser Referenzmessbalken folglich lediglich an einer einzigen Bandbreitenkoordinate angeordnet ist, hängt dieses Referenzsignal nicht von Eigenspannungsunterschieden über die Bandbreite des Bandes, sondern ausschließlich von dem (globalen) Bandzug bzw. dessen zeitlichem Verlauf ab.

Der Referenzmessbalken zeichnet folglich zeitliche Schwankungen des Bandzuges auf. Da diese zeitlichen Schwankungen des Bandzuges dem Planheitsmesssignal der Planheitsmessbalken überlagert sind, lässt sich auf diese Weise der Einfluss der zeitlichen Zugspannungsschwankungen im Band aus dem Messsignal der Planheitsmessbalken herausfiltern. Dieses gelingt im Rahmen der Erfindung in besonders exakter Weise, da das den Bandzug repräsentierende Referenzsignal exakt zu derselben Zeit aufgenommen wird, wie das eigentliche Planheitsmesssignal. Auf diese Weise ist eine besonders hohe Messgenauigkeit gewährleistet.

Dabei schlägt die Erfindung in besonders bevorzugter Weiterbildung vor, dass sich der Referenzmessbalken über im Wesentlichen denselben Umfangsbereich und folglich Drehwinkelbereich erstreckt, wie der Planheitsmessbalken bzw. wie die Planheitsmessbalken. Unter Berücksichtigung der Tatsache, dass die Planheitsmessbalken schräg zur Rollenachse angeordnet sind, ist der Referenzbalken folglich um ein vorgegebenes Maß kürzer als der Planheitsmessbalken, sodass sich die Planheitsmessbalken einerseits und der Referenzmessbalken andererseits über denselben Drehwinkelbereich bzw. Umfangsbereich erstrecken. Dieses führt dazu, dass synchron einerseits das Planheitsmesssignal bzw. Zugspannungssignal und andererseits das Referenzmesssignal aufgezeichnet werden können und stets zu jeder kontinuierlichen Planheitsmesskurve eine korrespondierende Referenzmesskurve existiert, welche denselben Zeitbereich abdeckt, sodass ein exaktes Herausfiltern von eventuellen Bandzugschwankungen möglich ist.

Nach einem weiteren Vorschlag ist vorgesehen, dass der Planheitsmessbalken in etwa in der Rollenmitte (bezogen auf die Breite der Rolle) angeordnet ist. Dann ist es zweckmäßig, wenn beidseitig des Referenzmessbalkens jeweils zumindest ein Planheitsmessbalken oder auch mehrere Planheitsmessbalken angeordnet ist bzw. angeordnet sind.

Vorteilhaft ist im Rahmen der Erfindung, dass sich die Planheitsmessbalken über einen verhältnismäßig großen Umfangsbereich und folglich auch einen verhältnismäßig großen Drehwinkelbereich der Rolle erstrecken können. Dieser Umfangsbereich bzw. dieser Drehwinkelbereich der Planheitsmessbalken ist bei den bekannten Umlenkmessrollen bislang verhältnismäßig klein gehalten worden, da sich mit steigendem Umfangswinkelbereich das Problem von zeitlichen Bandzugspannungsschwankungen verstärkt. Durch die erfindungsgemäße Kompensation von zeitlichen Bandzugspannungsschwankungen kann nun im Rahmen der Erfindung mit Planheitsmessbalken gearbeitet werden, welche sich über einen verhältnismäßig großen Drehwinkelbereich erstrecken. In der Praxis lässt sich dieses konstruktiv besonders vorteilhaft dadurch realisieren, dass sich ein Planheitsmessbalken aus einer Mehrzahl von sich unmittelbar aneinander anschließenden und fluchtenden Balkenabschnitten zusammensetzt, welche z. B. jeweils auf zwei endseitig angeordneten Kraftmessgebem abgestützt sind. Auf diese Weise besteht grundsätzlich die Möglichkeit, einen "einzigen" Messbalken, welcher sich aus einer Vielzahl von Teilmessbalken zusammensetzt, zu schaffen, welcher sich gleichsam spiralförmig bzw. wendelförmig über den Umfang und über die gesamte Bandbreite erstreckt. In einem solchen Fall ist es dann zweckmäßig, wenn in einem Bereich der Rolle zumindest ein Referenzmessbalken angeordnet ist, welcher sich ebenfalls über den gleichen Drehwinkelbereich erstreckt, sodass sich stets eine einwandfreie Kompensation der Bandzugschwankungen ergibt.

Gegenstand der Erfindung ist auch ein Verfahren zur Ermittlung von Planheitsfehlem eines Bandes bzw. zur Ermittlung der Bandplanheit, insbesondere eines Metallbandes, mit einer Planheitsmessrolle der beschriebenen Art, wobei mit dem Planheitsmessbalken ein Zugspannungssignal in Abhängigkeit von der die Breitenkoordinate repräsentierenden Zeit gemessen wird, wobei mit dem Referenzmessbalken ein von der Breitenkoordinate unabhängiges und den zeitlichen Verlauf des Bandzuges repräsentierendes Referenzsignal in Abhängigkeit von der Zeit gemessen wird und wobei das Referenzsignal aus dem Zugspannungssignal zur Ermittlung des Eigenspannungsverlaufes herausgefiltert wird. Dieses gelingt beispielsweise dadurch, dass das die Eigenspannung und folglich Bandfehler repräsentierende Eigenspannungssignal in Abhängigkeit von der Breitenkoordinate durch Differenzbildung zwischen dem Zugspannungssignal einerseits und dem Referenzsignal andererseits ermittelt wird.

Die vorangegangenen Erläuterungen machen deutlich, dass ein erfindungsgemäßer Bandzugmessbalken besonders bevorzugt als Referenzmessbalken in Kombination mit einem schrägen Planheitsmessbalken in einer Planheitsmessrolle eingesetzt wird. Hauptfunktion einer solchen Planheitsmessrolle ist die Ermittlung von Planheitsmessfehlem durch Messung der Bandspannungsverteilung über die Bandbreite, wobei der Bandzugmessbalken die Funktion eines Referenzmessbalkens übernimmt, sodass sich zeitliche Schwankungen des Bandzuges aus dem Messsignal herausfiltern lassen. Die Erfindung umfasst jedoch nach einem weiteren Aspekt auch solche Ausführungsformen einer Messrolle, welche nicht als Planheitsmessrolle arbeiten, sondern als Bandzugmessrolle und "lediglich" der Ermittlung des zeitlichen Verlaufes des Bandzuges eines Bandes und insbesondere Metallbandes dienen. Bei einer solchen Ausführungsform sind keine schräg zur Rollenachse verlaufenden Planheitsmessbalken vorgesehen, sondern lediglich ein oder mehrere Bandzugmessbalken, welche sich bei einer bestimmten Breitenkoordinate (ausschließlich) in Umfangsrichtung erstrecken und folglich nicht schräg zur Rollenachse, sondern im Wesentlichen senkrecht zur Rollenachse bzw. entlang der Bandlaufrichtung angeordnet sind. Ein solcher Bandzug-Messbalken entspricht folglich hinsichtlich Aufbau und Funktion den bereits erläuterten Referenzmessbalken, ohne dass jedoch Planheitsmessbalken zusätzlich vorgesehen sind. Mit einer solchen Bandzug-Messrolle mit Bandzug-Messbalken lässt sich folglich auf einfache und zugleich sehr exakte Weise der zeitliche Verlauf des Bandzuges eines über die Messrolle geführten Bandes und insbesondere Metallbandes messen. Die Messrolle zeichnet sich durch hohe Messgenauigkeit und insbesondere eine hohe Dynamik aus.

Im Übrigen umfasst die Erfindung auch Ausführungsformen einer Planheitsmessrolle, bei welchen ein Bandzugmessbalken bzw. Referenzmessbalken der beschriebenen Art mit Planheitsmesselementen anderer Art kombiniert wird, z. B. mit Planheitsmesselementen, welche nicht als Messbalken ausgebildet sind, sondern z. B. als singuläre Messstellen arbeiten, die über die Rollenbreite und/oder den Rollenumfang verteilt sind.

Im Folgenden wird die Erfindung anhand einer lediglich ein Ausführungsbeispiel darstellenden Zeichnung näher erläutert. Es zeigen
- Fig. 1: eine Planheitsmessrolle in einer ersten Ausführungsform in einer Draufsicht,
- Fig. 2: eine abgewandelte Ausführungsform des Gegenstandes nach Fig. 1,
- Fig. 3: ausschnittsweise einen Querschnitt durch den Gegenstand nach Fig. 1 im Bereich der Planheitsmessbalken,
- Fig.4: eine abgewandelte Ausführungsform des Gegenstandes nach Fig. 3,
- Fig. 5a bis 5e: schematisch das erfindungsgemäße Verfahren zur Ermitt- lung von Planheitsfehlern,
- Fig. 6: eine Messrolle in der Ausführungsform als Bandzug- messrolle zur Ermittlung des zeitlichen Verlaufes des Band- zuges.

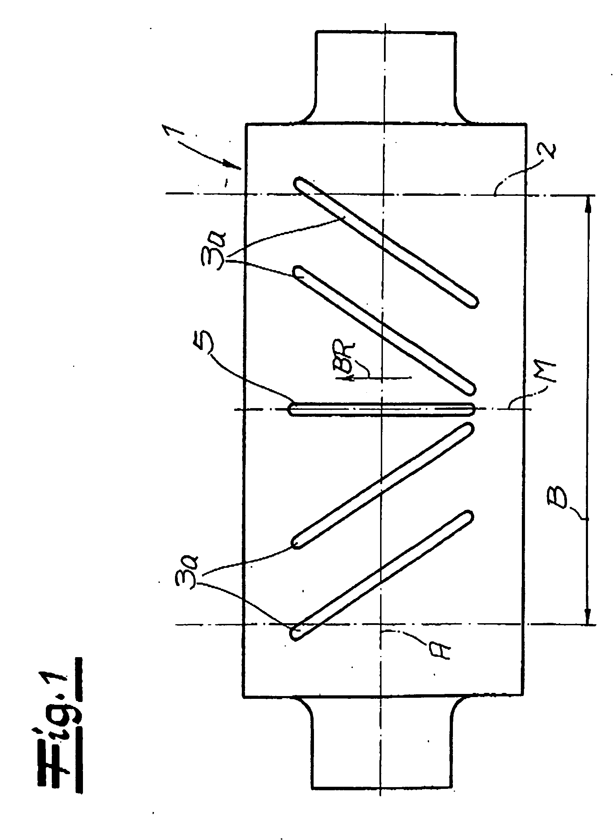

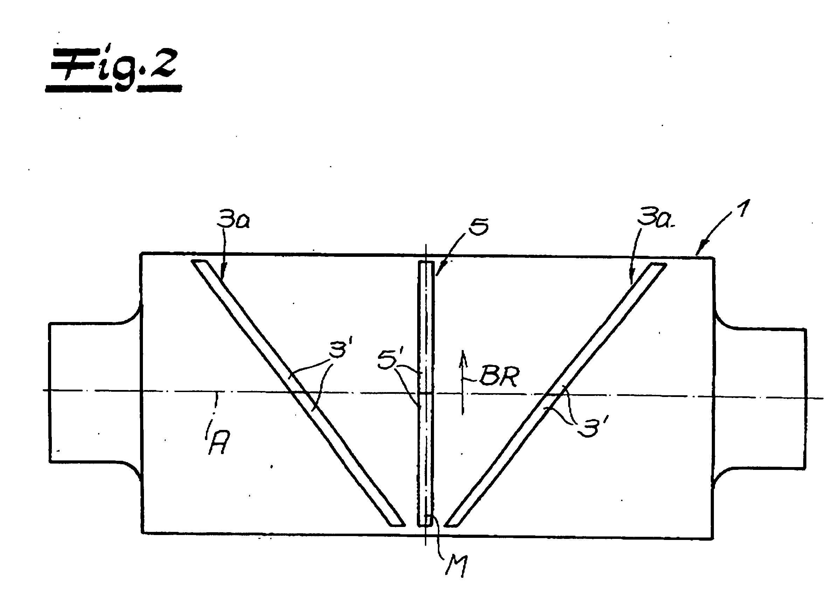

In den Figuren 1 bis 5 ist in einer ersten Ausführungsform der Erfindung eine Planheitsmessrolle 1 zur Ermittlung von Planheitsfehlern in einem Metallband 2 bzw. zur Ermittlung der Bandplanheit eines Metallbandes 2 dargestellt. Eine solche Planheitsmessrolle 1 lässt sich in eine Bandbehandlungslinie bzw. Bandprozesslinie oder eine Walzwerkstraße integrieren, Die Planheitsmessrolle 1 kann beispielsweise einer Bandbehandlungsvorrichtung, z. B. einem Walzwerk, Dressiergerüst oder einer Richtvorrichtung vorgeordnet und/oder nachgeordnet sein. Das Band 2 steht über die gesamte Bandbreite B unter einem vorgegebenen Bandzug und folglich unter Zugspannung und umschlingt die Planheitsmessrolle 1 mit einem vorgegebenen Umschlingungswinkel δ von beispielsweise 2° bis 10°, vorzugsweise 2° bis 5° Grad. Die Ermittlung der Bandplanheit bzw. die Ermittlung von Planheitsfehlern erfolgt mit der erfindungsgemäßen Planheitsmessrolle "indirekt" durch Messung der Bandzugspannungsverteilung über die Bandbreite B. Dazu weist die Planheitsmessrolle mehrere in den Rollenmantel bzw. in die Rollenoberfläche integrierte Planheitsmessbalken 3a, 3b auf, wobei jeder Planheitsmessbalken 3a, 3b im Ausführungsbeispiel auf zwei Sensoren 4 abgestützt ist, welche im Ausführungsbeispiel als Kraftmessgeber ausgebildet sind. Bei diesen kann es sich um Piezo-Quarze handeln. Insbesondere in den Figuren 1 und 2 ist erkennbar, dass die Planheitsmessbalken 3a, 3b schräg zur Rollenachse A ausgerichtet sind, sodass sie sich einerseits über einen vorgegebenen Breitenbereich b und andererseits über einen vorgegebenen Umfangsbereich U1 erstrecken, wobei ein solcher Umfangsbereich U1 einem bestimmten Drehwinkelbereich entspricht. Im Zuge des Betriebes umschlingt das Band 2 die Planheitsmessrolle 1 um den Umschlingungswinkel δ und übt dadurch örtliche Anpresskräfte auf den Planheitsmessbalken 3a bzw. 3b aus, wobei diese örtlichen Anpresskräfte von der Bandbreitenkoordinate abhängen. Mit der Drehung der Planheitsmessrolle 1 ändert sich aufgrund der Schrägstellung des Planheitsmessbalkens 3a bzw. 3b kontinuierlich die Bandbreitenkoordinate, sodass mit einem Planheitsmessbalken 3a bzw. 3b die Messung der Bandzugspannungsverteilung über einen bestimmten Bandbreitenbereich kontinuierlich erfolgt.

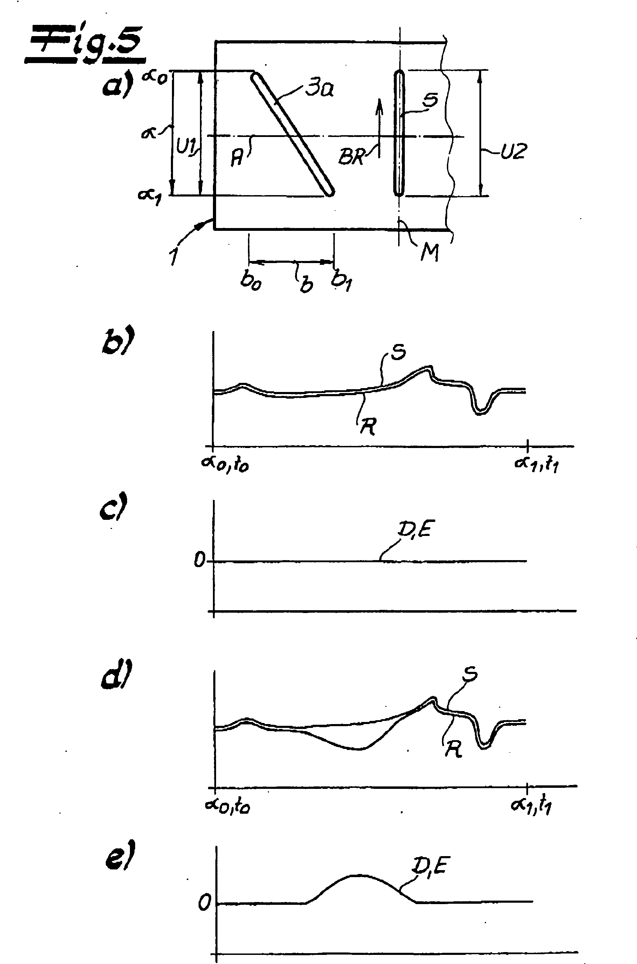

In der Praxis sind der von der Bandplanheit beeinflussten Zugspannungsverteilung, welche während eines bestimmten Zeitraums gemessen wird, eventuelle zeitliche Zugspannungsschwankungen überlagert, da die Messung für unterschiedliche Bandbreitenkoordinaten zu unterschiedlichen Zeitpunkten erfolgt. Um eventuell auftretende zeitliche Bandzugspannungsschwankungen zu eliminieren bzw. kompensieren weist die erfindungsgemäße Planheitsmessrolle 1 neben den an sich bekannten Planheitsmessbalken 3a, 3b zusätzlich zumindest einen Referenzmessbalken 5 auf. Dieser Referenzmessbalken, welcher in den Figuren 1 und 2 dargestellt ist, ist nun nicht wie die Planheitsmessbalken 3a, 3b schräg zur Rollenachse A angeordnet, sondern er verläuft im Wesentlichen in Umfangsrichtung und (in der Draufsicht) senkrecht zur Rollenachse A, das heißt entlang der Bandlaufrichtung BR bzw. parallel zur Bandlaufrichtung BR. Der Referenzmessbalken 5 ist folglich an einer (einzigen) Bandbreitenkoordinate angeordnet, sodass er ein von Eigenspannungsschwankungen über die Bandbreite unabhängiges aber von zeitlichen Schwankungen des Bandzuges abhängiges Referenzsignal erzeugt. Dazu ist auch der Referenzmessbalken 5 auf Sensoren, z. B. Kraftmessgebern, abgestützt, und zwar in entsprechender Weise wie die Planheitsmessbalken 3a, 3b. In den Figuren 1 und 2 ist erkennbar, dass sich der Referenzmessbalken 5 über einen Umfangsbereich U2 erstreckt, welcher im Wesentlichen dem Umfangsbereich U1 entspricht, über welchen sich der Planheitsmessbalken 3a, 3b erstreckt. Referenzmessbalken 5 einerseits und Planheitsmessbalken 3a, 3b andererseits erstrecken sich folglich über denselben Umfangsbereich U1 = U2 und folglich über denselben Drehwinkelbereich α, sodass exakt zeitgleich einerseits ein (breitenabhängiges) Planheitsmesssignal S mit den Planheitsmessbalken 3a, 3b und das (breitenunabhängige) Referenzsignal R mit dem Referenzmessbalken 5 aufgenommen werden. Anschließend kann dann die gewünschte Kompensation erfolgen, indem das eventuell zeitliche Zugspannungsschwankungen repräsentierende Referenzsignal R aus dem Planheitsmesssignal S herausgefiltert wird. Dazu wird auf die Figuren 5a bis 5e verwiesen:

Figur 5a zeigt zunächst noch einmal schematisch einen Teilbereich einer Planheitsmessrolle 1 mit einem schräg angeordneten Planheitsmessbalken 3a und einem dem Planheitsmessbalken 3a zugeordneten Referenzmessbalken 5. Der Planheitsmessbalken erstreckt sich über einen Umfangsbereich U1 und folglich Drehwinkelbereich α₀ bis α₁ und über einen Breitenbereich b₀ bis b₁. Der Referenzmessbalken 5 ist an einer festen Breitenkoordinate angeordnet und erstreckt sich über denselben Umfangsbereich U2 = U1 und folglich ebenfalls den Drehwinkelbereich α₀ bis α₁. Im Zuge der Drehung der Rolle 1 wird der Drehwinkelbereich α₀ bis α₁ in einem zeitlichen Bereich von t₀ bis t₁ durchlaufen.

Figur 5b zeigt beispielhaft einerseits das Bandspannungssignal S, welches von dem Planheitsmessbalken 3a erzeugt wird und andererseits das Referenzsignal R, welches von dem Referenzmessbalken 5 erzeugt wird, und zwar für einen ersten Beispielfall eines idealplanen Bandes, wobei jedoch während der Messung zeitliche Schwankungen des Bandzuges auftreten. Diese Schwankungen des Bandzuges finden einerseits in dem Bandspannungssignal S und andererseits in dem Referenzsignal R ihren Niederschlag. Durch Differenzbildung ergibt sich das in Fig. 5c dargestellte Eigenspannungssignal E, welches in diesem Beispielfall konstant ist, das heißt die Eigenspannungen variieren nicht über den vorgegebenen Bandbreitenbereich, sodass keine Bandfehler vorhanden sind.

Demgegenüber zeigen die Figuren 5d und 5e einen zweiten Beispielfall für ein nicht idealplanes Band, wobei wiederum zeitliche Schwankungen des Bandzuges während der Messung auftreten. Figur 5d zeigt das mit dem Planheitsmessbalken gemessene Bandspannungssignal S und das mit dem Referenzbalken gemessene Referenzsignal R und Fig. 5e zeigt das Differenzsignal D=S-R, welches die Eigenspannung E repräsentiert, die bei diesem Beispiel über die Bandbreite variiert.

Es wird folglich deutlich, dass mit Hilfe der Referenzmessbalken und durch entsprechende Kompensation eine exakte Bestimmung der Bandplanheit möglich wird, ohne dass die Messung durch zeitliche Zugspannungsschwankungen verfälscht wird.

Im Ausführungsbeispiel ist in etwa in der Rollenmitte M ein Referenzmessbalken 5 angeordnet. Beidseitig dieses Referenzmessbalkens 5 sind jeweils ein oder mehrere Planheitsmessbalken 3a, 3b angeordnet. In der Ausführungsform nach Fig. 1 sind beidseitig des Referenzmessbalkens 5 jeweils zwei schräg zur Rollenachse A angeordnete Planheitsmessbalken 3a angeordnet Demgegenüber zeigt Fig. 2 eine Ausführungsform, bei welcher beidseitig des Referenzbalkens 5 jeweils lediglich ein Planheitsmessbalken 3a angeordnet ist. Diese Planheitsmessbalken 3a und auch der Referenzmessbalken 5 gemäß Fig. 2 erstrecken sich über einen größere Drehwinkelbereich und folglich Umfangsbereich der Rolle als die Balken gemäß Fig. 1. Aus konstruktiven Gründen kann es zweckmäßig sein, bei dieser Ausführungsform nach Fig. 2 jeden Messbalken 3a, 3b und auch jeden Referenzbalken 5 aus mehreren Balkenabschnitten 3' bzw. 5' zusammenzusetzen, wobei sich die Balkenabschnitte unmittelbar fluchtend hintereinander unter Bildung des Balkens aneinander anschließen. Dabei kann jeder Balkenabschnitt 3' bzw. 5' selbst wiederum auf mehreren Kraftmessgebern, z. B. zwei endseitig angeordneten Kraftmessgebem abgestützt sein. Einzelheiten sind in Fig. 2 nicht dargestellt.

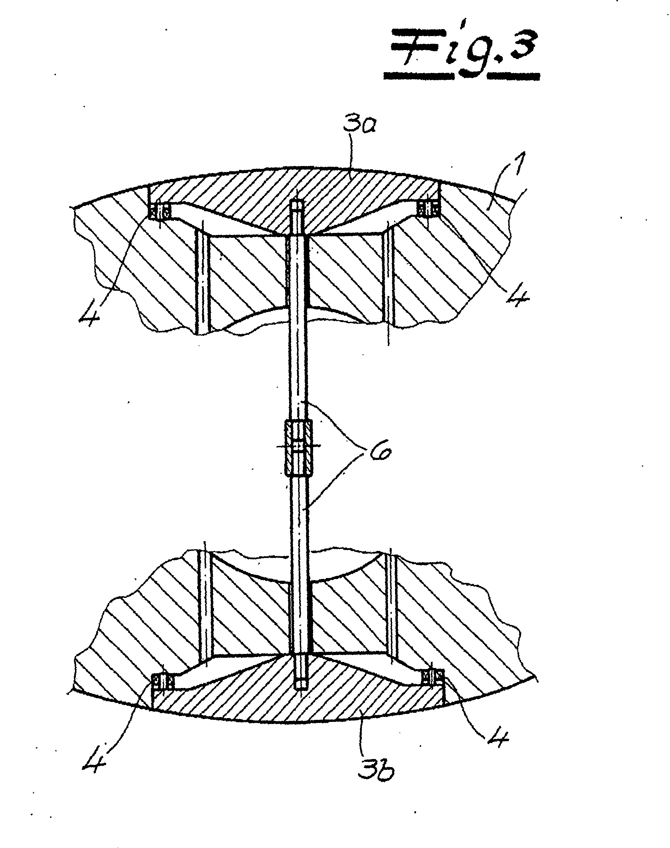

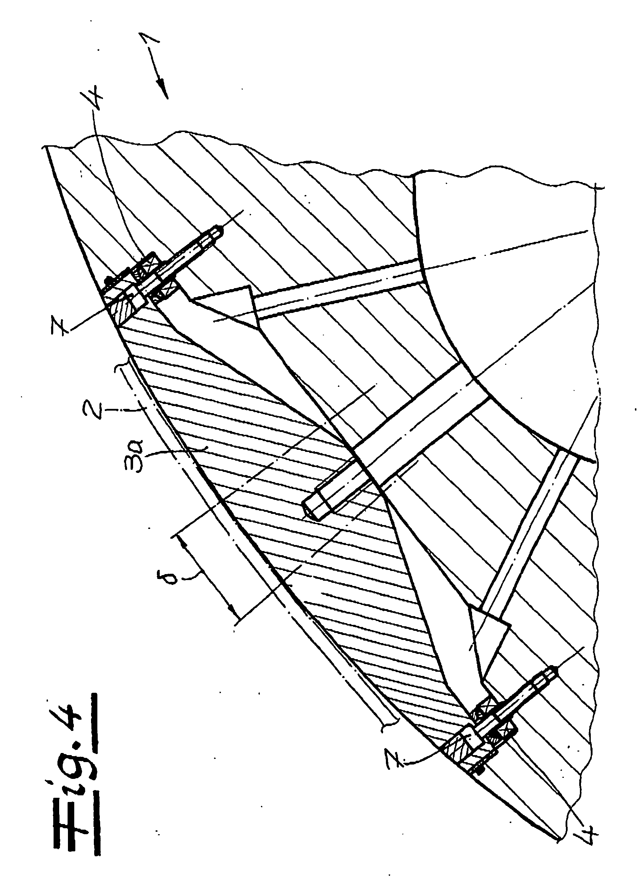

Schließlich zeigen die Figuren 3 und 4 mögliche Alternativen des konstruktiven Aufbaus der Umlenkmessrolle und insbesondere die Konstruktion der Planheitsmessbalken. Dabei kann auf bekannte Konstruktionen zurückgegriffen werden, welche beispielsweise in DE 10 2004 008 303 A1 oder auch DE 10 2004 003 676 A1 beschrieben werden.

Figur 3 zeigt eine bevorzugte Ausführungsform, bei welcher zwei Planheitsmessbalken 3a und 3b diametral gegenüberliegend in den Rollenmantel integriert sind und über eine zentrale Zugstange 6 miteinander bzw. gegeneinander verspannt sind. Jeder der Planheitsmessbalken 3a, 3b ist dabei auf zwei Kraftmessgebem 4 abgestützt. Über die zentrale Zugstange 6 werden die Kraftmessgeber vorgespannt. Auf diese Weise gelingt eine Kompensation der Vorspannung wie auch der Fliehkräfte bzw. der Gewichtskräfte sodass im Ergebnis ohne Kraftnebenschluss gearbeitet wird (vgl. DE 10 2004 008 303 A1 ).

Alternativ kann gemäß Fig. 4 auch mit Planheitsmessrollen gearbeitet werden, welche mit Hilfe von Befestigungsschrauben 7 an der Rolle befestigt sind, wobei diese Befestigungsschrauben 7 beispielsweise die ringförmigen Kraftmessgeber 4 durchgreifen können.

Der in Fig. 3 und 5 dargestellte Aufbau betrifft dort den Planheitsmessbalken 3a und 3b. Die Referenzmessbalken 5 können jedoch in identischer oder ähnlicher Weise befestigt bzw. verspannt werden.

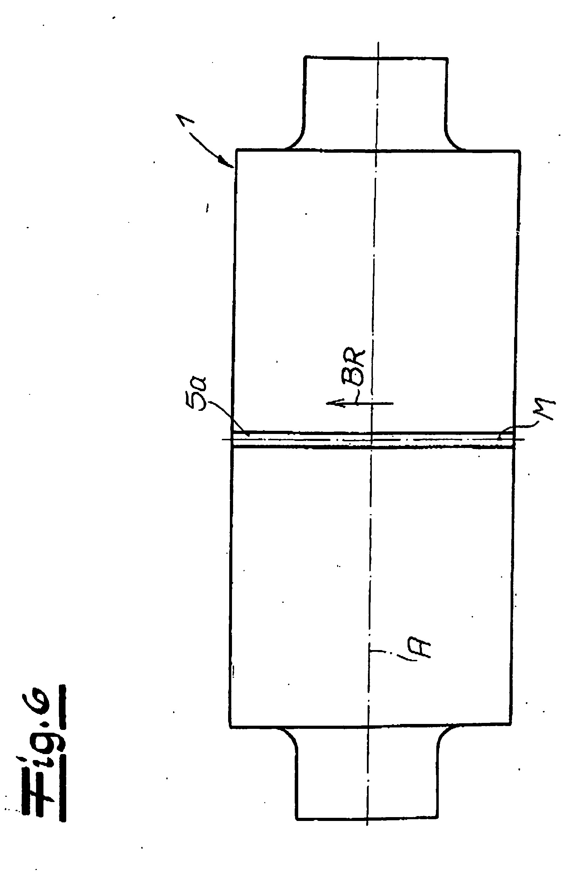

Während die Figuren 1 bis 5 eine Messrolle in der Ausführungsform als Planheitsmessrolle mit einerseits schrägen Messbalken und andererseits Referenzmessbalken 5 zeigen, betrifft Figur 6 eine Messrolle in der Ausführungsform als Bandzugmessrolle. Bei dieser Bandzug-Messrolle ist in den Rollenmantel bzw. in die Rollenoberfläche ein als Bandzugmessbalken 5a ausgebildeter Messbalken integriert, wobei sich dieser Bandzugmessbalken 5a - so wie die Referenzmessbalken 5 gemäß Figuren 1 bis 5 - ausschließlich in Umfangsrichtung und folglich nicht schräg zur Rollenachse, sondern parallel zur Bandlaufrichtung erstrecken. Auf schräg zur Rollenachse verlaufende Planheitsmessbalken wird bei dieser Ausführungsform verzichtet, da diese Messrolle nicht als Planheitsmessrolle, sondern "lediglich" als Bandzug-Messrolle eingesetzt werden soll. Der Bandzug-Messbalken 5a ist (in etwa) in der Rollenmitte angeordnet. Mit einer solchen Messrolle lassen sich nun zeitliche Bandzugschwankungen exakt bestimmen. In der Figur 6 ist dabei angedeutet, dass sich der Bandzugmessbalken 5a über den gesamten Rollenumfang erstreckt, sodass mit der Messrolle kontinuierlich gemessen werden kann. Der Messbalken kann dabei konstruktiv so aufgebaut sein, wie die in den Figuren 1 bis 5 beschriebenen Referenzmessbalken 5 und/oder Planheitsmessbalken 3a, 3b. Konstruktiv bietet es sich an, wenn der Bandzugmessbalken 5a sich aus mehreren Balkenabschnitten zusammensetzt, wobei sich jeder Balkenabschnitt selbst wiederum auf mehreren Kraftmessgebern, z. B. zwei endseitig angeordneten Kraftmessgebem abstützt. Einzelheiten sind in der Figur 6 nicht dargestellt.

## Patentansprüche

1. Messrolle (1) zur Ermittlung von Planheitsfehlern eines Bandes (2) und/oder zur Ermittlung des Bandzuges eines Bandes (2), insbesondere eines Metallbandes,
mit zumindest einem in den Rollenmantel bzw. in die Rollenoberfläche integrierten Messbalken (5, 5a), welcher auf Sensoren abgestützt ist, **dadurch gekennzeichnet,**
**dass** der Messbalken (5, 5a) sich als Bandzugmessbalken (5, 5a) zur Ermittlung des zeitlichen Verlaufes des Bandzuges entlang der Umfangsrichtung über einen vorgegebenen Umfangsbereich erstreckt.

2. Messrolle nach Anspruch 1 in der Ausführungsform als Planheitsmessrolle (1) zur Ermittlung von Planheitsfehlern in einem Band (2), insbesondere Metallband,
mit zumindest einem in den Rollenmantel bzw. in die Rollenoberfläche integrierten Planheitsmessbalken (3a, 3b) welcher auf Sensoren (4) abgestützt ist und zur Bestimmung der Zugspannungsverteilung über die Bandbreite schräg zur Rollenachse (A) verläuft, sodass er sich einerseits über einen vorgegebenen Breitenbereich (b) und andererseits über einen vorgegebenen Umfangsbereich (U1) der Rolle erstreckt, **dadurch gekennzeichnet,**
**dass** dem Planheitsmessbalken (3a, 3b) zumindest ein Bandzugmessbalken als Referenzmessbalken (5) zugeordnet ist, welcher ebenfalls auf Sensoren (4) abgestützt ist und sich zur Ermittlung des zeitlichen Verlaufs des Bandzuges im Wesentlichen entlang der Umfangsrichtung über einen vorgegebenen Umfangsbereich (U2) erstreckt.

3. Planheitsmessrolle nach Anspruch 2, **dadurch gekennzeichnet, dass** sich der Referenzmessbalken (5) und der Planheitsmessbalken (3a, 3b) im Wesentlichen über denselben Umfangsbereich (U1 = U2) erstrecken.

4. Planheitsmessrolle nach Anspruch 2 oder 3, **dadurch gekennzeichnet, dass** der Referenzmessbalken (5) in etwa in der Rollenmitte (M) angeordnet ist, wobei beidseitig des Referenzmessbalkens (5) jeweils zumindest ein Planheitsmessbalken (3a, 3b) angeordnet ist.

5. Messrolle nach Anspruch 1 in der Ausführungsform als Bandzugmessrolle zur Ermittlung des Bandzuges eines Bandes, **dadurch gekennzeichnet, dass** sich der Bandzugmessbalken (5a) über den gesamten Rollenumfang erstreckt.

6. Verfahren zur Ermittlung von Planheitsfehlern eines Bandes (2), insbesondere Metallbandes, mit einer Planheitsmessrolle (1) nach einem der Ansprüche 2 bis 4, **dadurch gekennzeichnet,**
**dass** mit dem Planheitsmessbalken (3a, 3b) ein Zugspannungssignal (S) in Abhängigkeit von der die Breitenkoordinate (b) repräsentierenden Zeit (t) gemessen wird,
**dass** mit dem Referenzmessbalken (5) ein von der Breitenkoordinate unabhängiges und den zeitlichen Verlauf des Bandzuges repräsentierendes Referenzsignal (R) in Abhängigkeit von der Zeit gemessen wird und
wobei das Referenzsignal (R) aus dem Zugspannungssignal (S) zur Ermittlung des Eigenspannungsverlaufes (E) des Bandes herausgefiltert wird.

7. Verfahren nach Anspruch 6, **dadurch gekennzeichnet, dass** das Eigenspannungssignal (E) in Abhängigkeit von der Bandbreitenkoordinate durch Differenzbildung zwischen dem Zugspannungssignal (S) und dem Referenzsignal (R) ermittelt wird.

## Claims

1. A measuring roller (1) for determining flatness defects of a strip (2) and/or for determining the tension of a strip (2), particularly a metal strip,
with at least one measuring beam (5, 5a) that is respectively integrated into the roller tube or into the roller surface and supported on sensors,
**characterized in**
**that** the measuring beam (5, 5a) extends along the circumferential direction over a predefined circumferential range in the form of a tension measuring beam (5, 5a) for determining the time history of the tension.

2. The measuring roller according to Claim 1 in the form of a flatness measuring roller (1) for determining flatness defects in a strip (2), particularly a metal strip,
with at least one flatness measuring beam (3a, 3b) that is respectively integrated into the roller tube or into the roller surface and supported on sensors (4), wherein said flatness measuring beam extends over the strip width transverse to the roller axis (A) in order to determine the tensile stress distribution such that it extends over a predefined width range (b) on the one hand and over a predefined circumferential range (U1) of the roller on the other hand, **characterized in**
**that** at least one tension measuring beam in the form of a reference measuring beam (5) is assigned to the flatness measuring beam (3a, 3b) and also supported on sensors (4), wherein said tension measuring beam essentially extends along the circumferential direction over a predefined circumferential range (U2) in order to determine the time history of the tension.

3. The flatness measuring roller according to Claim 2, **characterized in that** the reference measuring beam (5) and the flatness measuring beam (3a, 3b) essentially extend over the same circumferential range (U1 = U2).

4. The flatness measuring roller according to Claim 2 or 3, **characterized in that** the reference measuring beam (5) is arranged approximately in the roller center (M), wherein at least one flatness measuring beam (3a, 3b) is respectively arranged to both sides of the reference measuring beam (5).

5. The measuring roller according to Claim 1 in the form of a tension measuring roller for determining the tension of a strip, **characterized in that** the tension measuring beam (5a) extends over the entire roller circumference.

6. A method for determining flatness defects of a strip (2), particularly a metal strip, with a flatness measuring roller (1) according to one of Claims 2 to 4, **characterized in**
**that** a tensile stress signal (S) is measured in dependence on the time (t) representing the width coordinate (b) by means of the flatness measuring beam (3a, 3b), and in
**that** a reference signal (R) that is not dependent on the width coordinate and represents the time history of the tension is measured in dependence on the time by means of the reference measuring beam (5), wherein the reference signal (R) is filtered out of the tensile stress signal (S) in order to determine the internal stress history (E) of the strip.

7. The method according to Claim 6, **characterized in that** the internal stress signal (E) is determined in dependence on the strip width coordinate by forming the difference between the tensile stress signal (S) and the reference signal (R).

## Revendications

1. Cylindre capteur (1 ) pour définir des défauts de planéité d'une bande (2) et/ou pour définir la traction de bande exercée sur une bande (2), notamment sur une bande métallique,
avec au moins une barre de mesure (5, 5a) intégrée dans l'enveloppe du cylindre ou la surface du cylindre, qui s'appuie sur des capteurs, **caractérisé en ce que**
en tant que barre de mesure de la traction de bande (5, 5a) pour définir la courbe dans le temps de la traction de bande le long de la direction périphérique, la barre de mesure (5, 5a) s'étend sur une zone périphérique prédéfinie.

2. Cylindre capteur selon la revendication 1 dans la forme de réalisation en tant que cylindre capteur de planéité (1) pour définir les défauts de planéité dans une bande (2), notamment dans une bande métallique,
avec au moins une barre de mesure de la planéité (3a, 3b) intégrée dans l'enveloppe du cylindre ou dans la surface du cylindre, qui s'appuie sur des capteurs (4) et qui pour définir la répartition de l'effort de traction s'étend sur la largeur de bande, en inclinaison par rapport à l'axe du cylindre (A), de sorte à s'étendre d'une part sur une zone de largeur prédéfinie (b) et d'autre part sur une zone périphérique définie (U1) du cylindre, **caractérisé en ce**
**qu'**au moins une barre de mesure de la traction de bande qui s'appuie également sur des capteurs (4) et qui pour définir la courbe dans le temps de la tension de bande, s'étend sensiblement le long de la direction périphérique sur une zone périphérique prédéfinie (U2) est associée à la barre de mesure de planéité (3a, 3b) en tant que barre de mesure de référence (5).

3. Cylindre capteur de planéité selon la revendication 2, **caractérisé en ce que** la barre de mesure de référence (5) et la barre de mesure de planéité (3a, 3b) s'étendent sensiblement sur la même zone périphérique (U1 = U2).

4. Cylindre capteur de planéité selon la revendication 2 ou 3, **caractérisé en ce que** la barre de mesure de référence (5) est disposée approximativement au centre du cylindre (M), de part et d'autre de la barre de mesure de référence (5) étant chaque fois disposée au moins une barre de mesure de la planéité (3a, 3b).

5. Cylindre capteur selon la revendication 1 dans la forme de réalisation en tant que cylindre capteur de la tension de bande pour définir la tension de bande d'une bande, **caractérisé en ce que** la barre de mesure de la tension de bande (5a) s'étend sur toute la périphérie du cylindre.

6. Procédé pour définir des défauts de planéité d'une bande (2), notamment d'une bande métallique avec un cylindre capteur de planéité (1) selon l'une quelconque des revendications 2 à 4, **caractérisé en ce**
**qu'**avec les barres de mesure de planéité (3a, 3b), on mesure un signal d'effort de traction (S) en fonction du temps (t) représentant les coordonnées de largeur (b),
**qu'**avec la barre de mesure de référence (5), on mesure un signal de référence (R) indépendant des coordonnées de largeur et représentant la courbe dans le temps de la tension de bande (R) en fonction du temps et
le signal de référence (R) étant filtré hors du signal de d'effort de traction (S), pour définir la courbe de contrainte propre (E) de la bande.

7. Procédé selon la revendication 6, **caractérisé en ce qu'**on définit le signal de contrainte propre (E) en fonction des coordonnées de largeur de bande par recherche de la différence entre le signal d'effort de traction (S) et le signal de référence (R).
